# EUROPÄISCHE PATENTSCHRIFT

(11) **EP 2 470 835 B1**
(45) Veröffentlichungstag und Bekanntmachung des Hinweises auf die Patenterteilung: **21.10.2015**
(21) Anmeldenummer: 10742499.6
(22) Anmeldetag: 12.08.2010
(51) Int. Cl.: F24C 15/16, A47B 88/04, F16B 2/02

(54) **FÜHRUNGSSCHIENE MIT EINER SCHNELLBEFESTIGUNGSVORRICHTUNG**
GUIDE RAIL HAVING A QUICK FASTENING DEVICE
RAIL DE GUIDAGE AVEC UN DISPOSITIF DE FIXATION RAPIDE

(30) Priorität: 25.08.2009 DE 202009005177 U
(43) Veröffentlichungstag der Anmeldung: 04.07.2012
(73) Patentinhaber: Paul Hettich GmbH & Co. KG, 32278 Kirchlengern (DE)
(72) Erfinder: REIDT, Daniel, 32052 Herford (DE); BUDDE, Sven, 32312 Lübbecke (DE); REDEKER, Holger, 32584 Löhne (DE); KAPS, Timo, 33824 Werther (DE)
(74) Vertreter: Dantz, Jan Henning
(86) Internationale Anmeldenummer: PCT/EP2010/061757
(87) Internationale Veröffentlichungsnummer: WO 2011/023561

(56) Entgegenhaltungen:
- DE-A1- 3 030 199
- DE-U1-202004 005 475
- DE-U1-202006 002 251

## Beschreibung

Die vorliegende Erfindung betrifft eine an horizontal verlaufenden und im Endbereich winklig abgebogenen Stangen eines gitterartigen Seitenteiles eines Backofens, eines Geschirrspülers oder ähnlichen Möbelteilen befestigbare Führungsschiene mit einer Schnellbefestigungsvorrichtung, welche aus zwei in den Endbereichen der Führungsschiene befestigten Halteelementen besteht, die lösbar an einer Stange eines gitterartigen Seitenteiles festlegbar sind und jeweils einen ersten, eine Stange in ihrem Längserstreckungsbereich und einen zweiten, die Stange in ihren abgewinkelten Endbereichen teilweise umgreifenden Halteabschnitt aufweisen, wobei der dem hinteren, abgebogenen Endbereich zugeordnete Halteabschnitt des hinteren Halteelementes in Richtung der Rückseite der Führungsschiene hin offen ist, so dass die Führungsschiene mit der Schnellbefestigungsvorrichtung von der Vorderseite des Seitengitters ausgehend auf eine der Stangen aufschiebbar und befestigbar ist und das vordere Halteelement in seinem eine Stange in ihrem Längserstreckungsbereich teilweise umgreifenden Abschnitt einen unterhalb einer Stange liegenden Schenkel und eine sich von dort aus nach oben erstreckende, federnde Rastnase aufweist, welche bei montierter Position der Führungsschiene die vom Halteelement umgriffene Stange hintergreift.

Eine Führungsschiene mit einer Schnellbefestigungsvorrichtung der gattungsgemäßen Art ist aus der DE 20 2006 002 251 U1 bekannt.

Bei der dort beschriebenen Konstruktion erstreckt sich die federnde Rastnase mit ihrem oberen, freien Ende etwa bis in eine horizontale Mittelebene der vom Halteelement umgriffenen Stange bzw. geringfügig darüber hinaus.

Um die Führungsschiene gegebenenfalls aus ihrer bestimmungsgemäßen Monlageposition einer Stange lösen zu können, ist es möglich, die Rastnase durch manuelle Betätigung bis in eine Ebene unterhalb der Stange zu verschwenken, so dass nun das Halteelement behinderungsfrei von der Stange seitlich abgenommen werden kann.

Die DE 30 30 199 offenbart einen Auszug, das an einem Halteteil aus Kunststoff mit einer federelastischen Verformbarkeit fixierbar ist.

Unter extrem ungünstigen äußeren Umständen und bei Aufwendung großer Kräfte sowie unter Berücksichtigung der Möglichkeit von Deformationen ist es beim Stand der Technik zumindest denkbar, dass die Führungsschiene ungewollt von der betreffenden Stange gelöst werden könnte.

Der vorliegenden Erfindung liegt die Aufgabe zugrunde, eine Führungsschiene der gattungsgemäßen Art dahingehend zu verbessern, dass eine sichere Festlegung an einer Stange, insbesondere im vorderen Endbereich dieser Stange unter allen Umständen gewährleistet ist. Diese Aufgabe wird erfindungsgemäß durch eine Führungsschiene mit den Merkmalen des Anspruches 1 gelöst.

Durch diese konstruktiv einfache und kostengünstige Maßnahme wird ein Trennen des Halteelementes und damit auch der Führungsschiene von der besagten Stange nur dann möglich, wenn die Rastnase bewusst durch manuelle Betätigung so weit nach unten gezogen wird, dass das Halteelement seitlich über die Stange hinweg von dieser abgezogen werden kann. Ein unbeabsichtigtes Lösen ist völlig ausgeschlossen, da die Rastnase mit ihrem oberen, freien Ende innerhalb des Durchbruches des oberen Schenkels des Halteelementes in ihrer Rastposition fixiert ist.

Damit wird die Sicherheit gegen unbeabsichtigtes Lösen einwandfrei gewährleistet.

Besonders vorteilhaft ist es, wenn die der Stange zugewandte Seitenkante der Rastnase in Richtung der Stange geneigt nach oben verläuft.

Hierdurch wird erreicht, dass im Falle des Einwirkens von in Löserichtung auf das Halteelement einwirkenden Seitenkräften die Rastnase nach oben verschwenkt und dadurch noch sicherer in dem Durchbruch des oberen Schenkels fixiert wird.

Somit kann auch bei extrem hohen Belastungen oder bei im Laufe der Zeit eintretenden geringen Deformationen des gesamten Systems ein unbeabsichtigtes Lösen der Führungsschiene nicht eintreten.

Weitere Merkmale der Erfindung sind Gegenstand weiterer Unteransprüche.

Ausführungsbeispiele der Erfindung sind in den beigefügten Zeichnungen dargestellt und werden im Folgenden näher beschrieben.

Es zeigen:

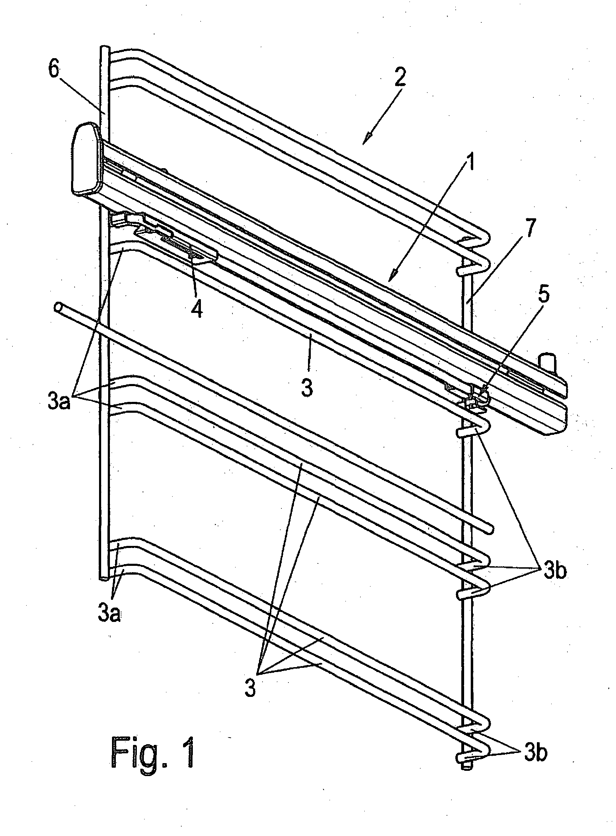

- Figur 1: eine perspektivische Darstellung eines Seitengitters mit einer daran befestigten, erfindungsgemäßen Führungsschiene
- Figur 2: eine der Perspektivdarstellung gemäß Figur 1 entsprechende Abbildung bei vom Seitengitter abgenommener Führungsschiene
- Figur 3: eine perspektivische Teildarstellung des hinteren, am Seitengitter befestigten Endbereiches der Führungsschiene
- Figur 4: eine Perspektivdarstellung eines hinteren Befestigungselementes der Führungsschiene
- Figur 5: eine perspektivische Teildarstellung der an einem Seitengitter befestigten Führungsschiene in ihrem vorderen Endbereich
- Figur 6: eine perspektivische Unteransicht eines vorderen Halteelementes der Führungsschiene
- Figur 7: eine perspektivische Oberansicht des vorderen Halteelementes
- Figur 8: eine der Figur 5 entsprechende Perspektivdarstellung bei noch nicht endgültig festgelegter Führungsschiene
- Figur 9: einen Vertikalschnitt durch den Befestigungsbereich der Führungsschiene in ihrem vorderen Endbereich
- Figur 10: ein der Figur 9 entsprechende Schnittdarstellung nach einem weiteren Ausführungsbeispiel der Erfindung.

In den Zeichnungen ist mit dem Bezugszeichen 1 insgesamt eine Führungsschiene und mit dem Bezugszeichen 2 insgesamt ein gitterartiges Seitenteil bezeichnet, wobei das Seitenteil 2 mehrere, horizontal verlaufende Stangen 3 aufweist, die jeweils mit abgewinkelten Endbereichen 3a und 3 b versehen sind. Dabei liegen die abgewinkelten Endbereiche 3a jeweils am vorderen und die Endbereiche 3b jeweils am hinteren Ende der Stangen 3.

Die Führungsschiene 1 ist an ihrer Unterseite mit einer Schnellbefestigungsvorrichtung versehen, die aus zwei in den Endbereichen der Führungsschiene 1 befestigten Halteelementen 4 und 5 besteht. Dabei befindet sich das mit dem Bezugszeichen 4 versehene Halteelement am vorderen und das mit dem Bezugszeichen 5 versehene Halteelement am hinteren Ende der Führungsschiene 1.

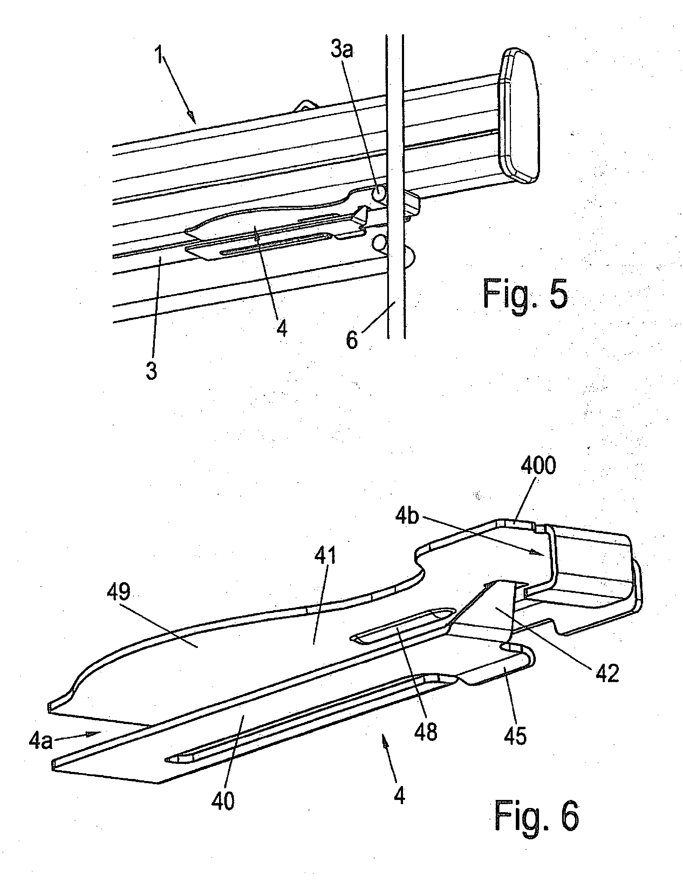

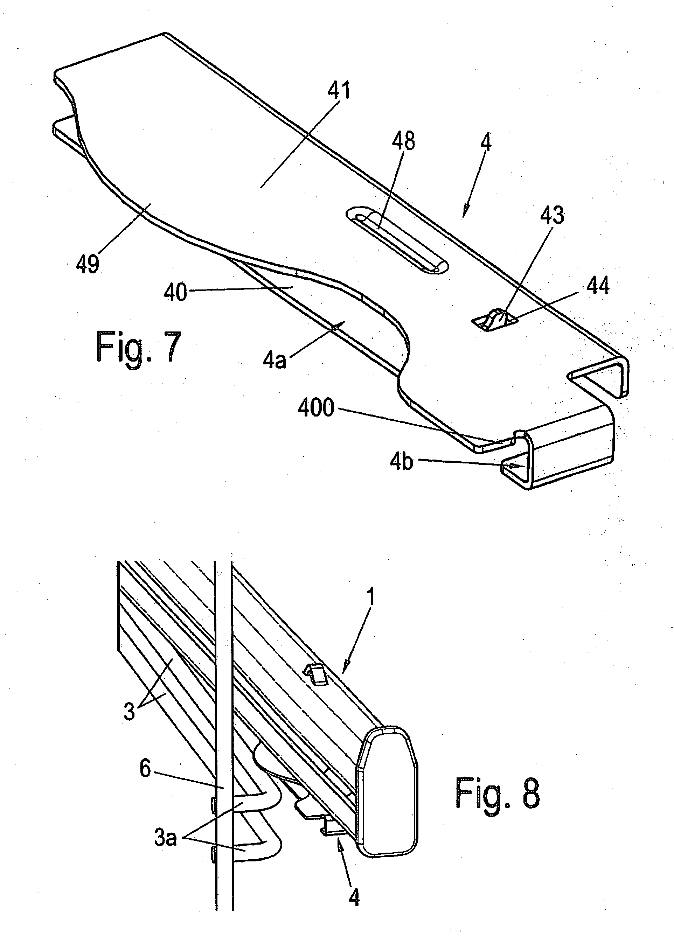

Das vordere Halteelement 4 ist, was die Figuren 6 und 7 besonders deutlich zeigen, mit zwei klammerartigen Halteabschnitten 4a und 4b versehen. Diese Halteabschnitte 4a und 4b verlaufen in einem Winkel zueinander, der der Gradzahl der Abwinkelung des vorderen Endbereiches 3a gegenüber einer horizontal verlaufenden Stange 3 entspricht. Insoweit können die klammerartigen Halteabschnitte 4a und 4b rechtwinklig zueinander verlaufen, es ist aber auch denkbar, dass die Halteabschnitte 4a und 4b in einem Winkel von mehr als 90° zueinander angeordnet sind. Der Halteabschnitt 4a umgreift eine Stange 3 im montierten Zustand in ihrem Längserstreckungsbereich und der Halteabschnitt 4b das abgebogene vordere Ende 3a einer Stange 3, so dass das Halteelement 4 insgesamt kippsicher gegenüber lediglich einer Stange 3 festlegbar ist. Die Festlegung der Führungsschiene 1 in Auszugsrichtung erfolgt an einer vorderen Vertikalstange 6 des gitterartigen Seitenteiles 2 durch einen Anschlag 400, der die Vertikalstange 6 hintergreift. Der Anschlag 400 ist benachbart zum Halteabschnitt 4b am oberen Schenkel 41 angeordnet. Durch die benachbarte Anordnung des Anschlages 400 und des Halteabschnittes 4b erfolgt die Festlegung der Führungsschiene 1 in Auszugsrichtung und auch entgegen der Auszugsrichtung, ohne dass diesbezüglich die Abstandstoleranzen zu einer hinteren Vertikalstange 7 berücksichtigt werden müssen.

Der Halteabschnitte 4a wird unterseitig begrenzt durch einen unteren Schenkel 40 und einen oberen Schenkel 41, wobei der Abstand dieser beiden Schenkel 40 bzw. 41 zueinander dem Durchmesser einer Stange 3 entspricht.

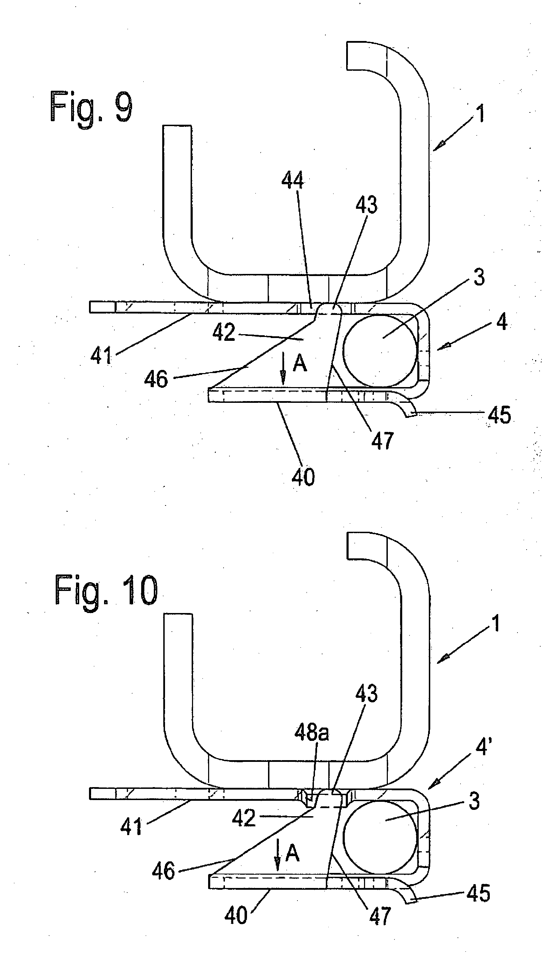

Am unteren Schenkel 40, welcher im montierten Zustand eine Stange 3 von unten untergreift, erstreckt sich eine federnde Rastnase 42 nach oben in Richtung des oberen Schenkels 41 und ragt mit seinem oberen, freien Ende 43 in einen Durchbruch 44 des oberen Schenkels 41 hinein, was die Figuren 6, 7 und 9 besonders deutlich zeigen. In Figur 9 ist dabei der montierte Zustand der Führungsschiene 1 auf einer Stange 3 dargestellt, d.h., das Halteelement 4 ist bis zu seiner bestimmungsgemäßen Gebrauchsposition auf die Stange 3 aufgeschoben. Die Figur 9 veranschaulicht, dass die federnde Rastnase 42 die Stange 3 rückseitig hintergreift, so dass ein Lösen des Halteelementes 4 von der Stange 3 nur dann möglich ist, wenn zunächst die Rastnase 42 in Richtung des Pfeiles A in Figur 9 zunächst manuell nach unten gedrückt ist, was durch das Erfassen eines Betätigungsabschnittes 45 ohne weiteres möglich ist. Wird die nach unten gerichtete und auf den Betätigungsabschnitt 45 ausgeübte Kraft wieder aufgehoben, bewegt sich die federnde Rastnase 42 wieder in ihre Position gemäß den Figuren 6, 7 und 9.

Beim Aufschieben des Halteelementes 4 auf eine Stange 3 wird durch eine Einführschräge 46 an der Rastnase 42 diese automatisch unter der Stange 3 hinweg geschoben, bis sich die Rastnase 42 wieder frei nach oben bewegen kann, bedingt durch die federnden Rückstellkräfte.

Im montierten Zustand, wie in Figur 9 gezeigt, wird deutlich, dass die der Stange 3 zugewandt liegende Seitenkante 47 der Rastnase 42 in Richtung der Stange 3 nach oben geneigt verläuft.

Es wurde schon erwähnt, dass das freie Ende 43 der Rastnase 42 in einen Durchbruch 44 des oberen Schenkels 41 hineinragt. Figur 9 zeigt wieder deutlich, dass das obere, stirnseitige Ende 43 der Rastnase 42 abgerundet ausgebildet ist und mit diesem abgerundeten Bereich an der Unterseite der Führungsschiene 1 anliegt, wenn entsprechend hohe Rückstellkräfte gegeben sind. In jedem Fall wird die Rastnase 42 dann nach oben gedrückt, wenn das Halteelement 4 unbeabsichtigt in horizontaler Richtung von der Stange 3 wegbewegt wird, da dann die nach oben und in Richtung der Stange 3 geneigte Seitenkante 47 der Rastnase 42 an der Stange 3 anliegt und die entsprechenden horizontalen Kräfte ein Aufrichten der Rastnase 42 bewirken. Ein Ausweichen der Rastnase 42 in horizontaler Richtung wird außerdem durch die formschlüssige Sicherung des Endes 43 im Durchbruch 44 verhindert. Zur Unterstützung der formschlüssigen Sicherung kann zusätzlich die der Stange abgewandt liegende Seite des Endes 43 steiler, ja sogar senkrecht ausgeführt sein (siehe Fig. 9).

Somit ist also ein unbeabsichtigtes Lösen auch bei Aufbringen hoher Kräfte sicher verhindert.

Wie die Figuren 6 und 7 deutlich machen, ist der obere Schenkel 41 mit einer in Richtung der Stange 3 nach unten durchgeprägten Sicke 48 versehen. Die Durchprägung dieser Sicke 48 und deren Lage sind so gewählt, dass das Aufschieben des Halteelementes 4 auf eine Stange 3 einen gewissen Kraftaufwand erfordert, um die Sicke 48 über die Stange hinweg zu schieben, bis sich diese unter gleichzeitiger geringfügiger Absenkung des oberen Schenkels 41 in einer die Stange 3 hintergreifenden Position befindet. Durch diese Sicke 48 wird einem Benutzer also deutlich signalisiert, dass das Halteelement 4 bei einer eventuellen Montage seine bestimmungsgemäße Position eingenommen hat, da der Benutzer die unterschiedlichen Kraftaufwendungen spürt. Zusätzlich ergibt das "Überspringen" der Sicke 48 über die Stange 3, unterstützt durch das anschließende Zurückfedern des unteren Schenkels 40 in eine entspannte Position, ein Geräusch, was der Benutzer hört und dieses als ein weiteres Indiz für die ordnungsgemäße Montage betrachten kann.

Um das Ansetzen des Halteelementes 4 zum Zwecke des seitlichen Aufschiebens auf eine Stange 3 zu erleichtern, ist der obere Schenkel 41 mit einer sich in Richtung der Stange 3 erstreckenden Ausbauchung 49 versehen, welche einem Benutzer eine leichte Orientierung für das korrekte Ansetzen des Halteelementes 4 in Bezug auf die zu umfassende Stange 3 gibt.

Die im Zusammenhang mit der Sicke 48 vorstehend ausführlich beschriebene Orientierungshilfe beim Ansetzen des Halteelementes 4 an eine Stange 3 kann auch durch ein Halteelement 4' nach einem weiteren Ausführungsbeispiel realisiert werden, wie in Figur 10 dargestellt ist. Hier ist die Sicke 48 ersetzt durch eine nach unten gerichtete, offene Durchprägung 48a, in deren Öffnungsbereich das obere, stirnseitige Ende 43 der Rastnase 42 eingreifen kann und deren äußerer Randbereich wie die Sicke 48 über eine Stange 4 hinweggeschoben werden muss, um das Halteelement 4' in seine bestimmungsgemäße Montageposition bringen zu können. Auch das Überfahren der Durchprägung 48a ergibt für einen Benutzer die besagten Orientierungshilfen für die ordnungsgemäße Lage bzw. Montageposition des Halteelementes 4 gegenüber der Stange 3. Weiterhin wird bei geringer Materialdicke des Schenkels 41 die formschlüssige Sicherung des Endes 43 in der Durchprägung 48a verbessert.

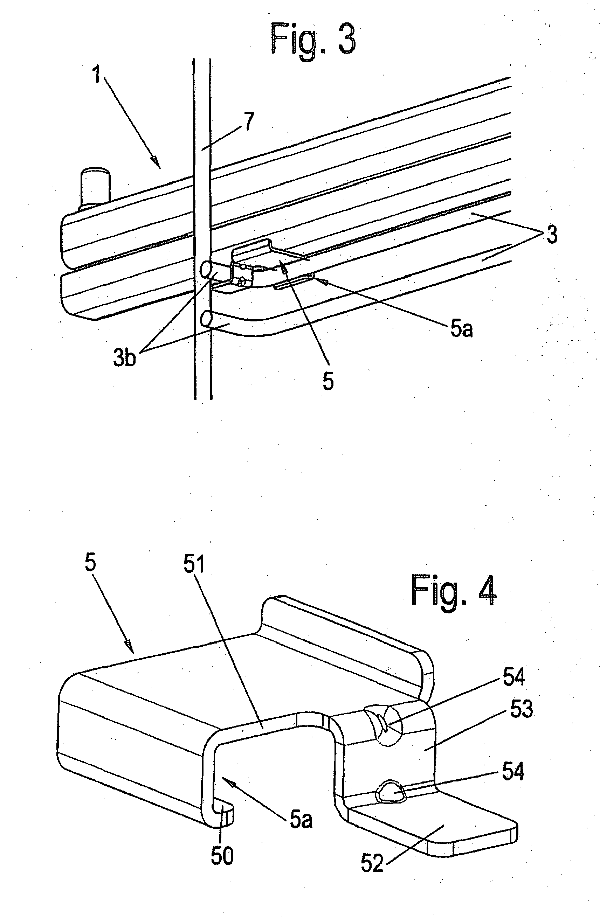

Das hintere Halteelement 5, besonders deutlich in den Figuren 3 und 4 erkennbar, ist mit einem klammerartigen Halteabschnitt 5a versehen, welcher im montierten Zustand eine Stange 3 in ihrem Längserstreckungsbereich umgreift. Dieser klammerartige Halteabschnitt 5a ist begrenzt durch einen unteren Schenkel 50 und einen oberen Schenkel 51, wobei der Abstand dieser beiden Schenkel 50 und 51 zueinander wiederum der Dicke der Stange 3 entspricht.

Außerdem ist das Halteelement 5 im hinteren Endbereich der Führungsschiene 1 mit einer Stützlasche 52 ausgestattet, welche im montierten Zustand, wie in Figur 3 gezeigt, den hinteren, abgebogenen Endbereich 3b einer Stange 3 untergreift. Diese Stützlasche 52 ist aus dem Bereich des oberen Schenkels 51 des Halteelementes 5 heraus nach unten abgebogen oder abgewinkelt und liegt in der gleichen Ebene wie der untere Schenkel 50 des klammerartigen Halteabschnittes 5a. Da die Stützlasche 52 den Endbereich 3b nur untergreift werden die Abstandstoleranzen zwischen den Vertikalstangen 6 und 7 hier ausgeglichen.

In den abgewinkelten Bereichen zwischen dem oberen Schenkel 51, einem sich daran anschließenden, nach unten gerichteten Steg 53 und der sich daran anschließenden Stützlasche 52 sind Sicken 54 eingeprägt, die zu einer Versteifung des Halteelementes 5 in den genannten Bereichen führen.

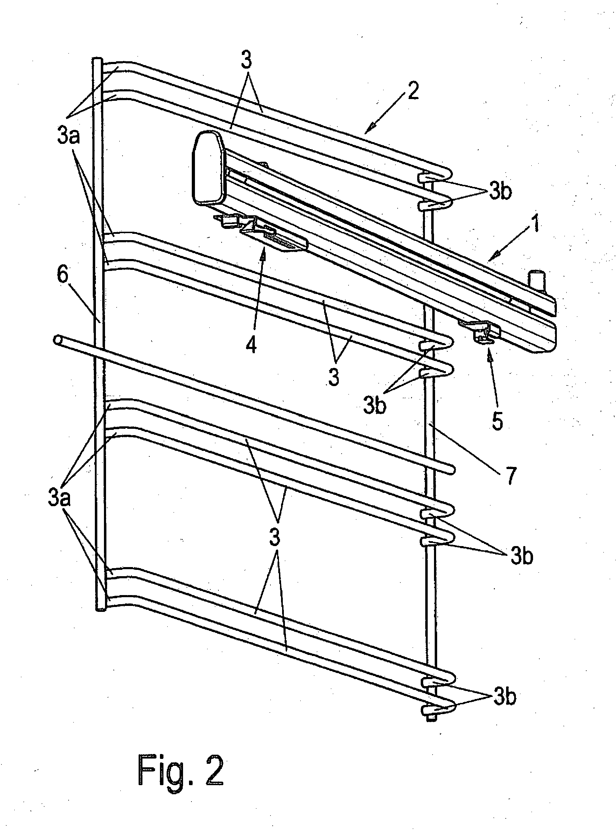

Die Montage einer Führungsschiene 1 mit den die Schnellbefestigungsvorrichtung bildenden Halteelementen 4 und 5 an einer Stange 3 eines Seitengitters 2 erfolgt, ausgehend von einer Position gemäß Figur 2 derart, dass zunächst das hintere Befestigungselement 5 an eine Stange 3 seitlich angesetzt und dann zunächst so weit nach hinten geschoben wird, bis der Steg 53 des hinteren Halteelementes 5 an das hintere, abgewinkelte Ende 3b einer Stange 3 anschlägt. Danach wird die Führungsschiene 1 mit dem vorderen Halteelement 4 in einer Horizontalbewegung an eine Stange 3 herangeschwenkt aus einer Position heraus, die sich aus Figur 8 ergibt. Im Zuge dieser Verschwenkung wird das vordere Halteelement 4 in der weiter oben angegebenen Weise auf den Längserstreckungsbereich der Stange 3 ebenso aufgeschoben wie auf das vordere, abgewinkelte Ende 3a der gleichen Stange. Es findet dann eine Selbstverrastung statt, wie ebenfalls weiter oben beschrieben.

Bei einer erforderlichen Demontage wird zunächst die Rastnase 42 aus der Ebene der Stange 3 heraus nach unten verschwenkt und dann zunächst die Führungsschiene 1 von der Stange 3 in einer horizontalen Schwenkbewegung abgezogen, so dass sich wieder eine Position gemäß Figur 8 ergibt. Nun kann die Führungsschiene 1 durch Ziehen in Auszugsrichtung insgesamt von der Stange 3 abgenommen und beispielsweise Reinigungszwecken zugeführt werden.

Die Halteelemente 4 und 5 sind vorzugsweise einstückig ausgebildet und können sowohl aus Metall wie auch aus Kunststoff hergestellt sein.

### Bezugszeichenliste

- 1: Führungsschiene
- 2: Seitenteil
- 3: Stange
- 3a: Endbereich
- 3b: Endbereich
- 4,: 4' Halteelement
- 4a: Halteabschnitt
- 4b: Halteabschnitt
- 5: Halteelement
- 5a: Halteabschnitt
- 6: Vertikalstange
- 7: Vertikalstange

- 40: Schenkel
- 41: Schenkel
- 42: Rastnase
- 43: Ende
- 44: Durchbruch
- 45: Betätigungsabschnitt
- 46: Einführschräge
- 47: Seitenkante
- 48: Sicke
- 48a: Durchprägung
- 49: Ausbauchung
- 50: Schenkel
- 51: Schenkel
- 52: Stützlasche
- 53: Steg
- 54: Sicke

- 400: Anschlag

## Patentansprüche

1. Führungsschiene (1), die an horizontal verlaufenden und im Endbereich (3a, 3b) winklig abgebogenen Stangen (3) eines gitterartigen Seitenteiles (2) eines Backofens, eines Geschirrspülers oder ähnlichen Möbelteilen befestigbar ist, mit einer Schnellbefestigungsvorrichtung, welche aus zwei in den Endbereichen der Führungsschiene (1) befestigten Halteelementen (4, 4', 5) besteht, die lösbar an einer Stange (3) eines gitterartigen Seitenteiles (2) festlegbar sind und jeweils einen ersten, eine Stange (3) in ihrem Längserstreckungsbereich und einen zweiten, die Stange (3) in ihren abgewinkelten Endbereichen (3a, 3b) teilweise umgreifenden Halteabschnitt (4a, 4b, 5a, 52, 53) aufweisen, wobei der dem hinteren, abgebogenen Endbereich (3b) zugewandte Halteabschnitt (52, 53) in Richtung der Rückseite der Führungsschiene (1) hin offen ist, so dass die Führungsschiene (1) mit der Schnellbefestigungsvorrichtung von der Vorderseite des Seitengitters (2) ausgehend auf eine der Stangen (3) aufschiebbar und befestigbar ist und dass das vordere Halteelement (4, 4') in seinem eine Stange (3) in ihrem Längserstreckungsbereich teilweise umgreifenden Halteabschnitt (4a) an einem unterhalb einer Stange (3) liegenden Schenkel (40) und eine sich von dort aus nach oben erstreckende, federnde Rastnase (42) aufweist, welche bei montierter Position der Führungsschiene (1) die vom Halteelement umgriffene Stange (3) hintergreift, **dadurch gekennzeichnet, dass** die Rastnase (42) mit ihrem oberen, freien Ende (43) in einen Durchbruch (44) des die Stange (3) oberseitig übergreifenden Schenkels (41) des vorderen Halteelementes (4, 4') hineinragt und ein Ausweichen der Rastnase (42) in horizontale Richtung durch eine formschlüssige Sicherung des Endes (43) in dem Durchbruch (44) verhindert wird.

2. Führungsschiene nach Anspruch 1, **dadurch gekennzeichnet, dass** die der Stange (3) zugewandte Seitenkante (47) der Rastnase (42) in Richtung der Stange (3) geneigt nach oben verläuft.

3. Führungsschiene nach Anspruch 1 oder 2, **dadurch gekennzeichnet, dass** die Rastnase (42) auf der der Stange (3) abgewandten Rückseite mit einer Einführschräge (46) ausgestattet ist.

4. Führungsschiene nach einem der vorhergehenden Ansprüche, **dadurch gekennzeichnet, dass** die Rastnase (42) mittels eines Betätigungsabschnittes (45) aus der Ebene der Stange (3) heraus nach unten abschwenkbar ist.

5. Führungsschiene nach einem der vorhergehenden Ansprüche, **dadurch gekennzeichnet, dass** der obere Schenkel (41) des Halteelementes (4) mit einer parallel zu der Stange (3) verlaufenden, im montierten Zustand die Stange (3) hintergreifenden und sich in Richtung des unteren Schenkels (40) erstreckenden Sicke (48) ausgestattet ist.

6. Führungsschiene nach einem der Ansprüche 1 bis 4, **dadurch gekennzeichnet, dass** der obere Schenkel (41) des Halteelementes (4') mit einer sich in Richtung des unteren Schenkels (40) erstreckenden Durchprägung (48a) ausgestattet ist, welche im montierten Zustand der Führungsschiene (1) die Stange (3) hintergreift und in deren Durchbruch das stirnseitige, freie Ende (43) der Rastnase (42) eingreift.

7. Führungsschiene nach einem der vorhergehenden Ansprüche, **dadurch gekennzeichnet, dass** der obere Schenkel (41) des Halteelementes (4, 4') mit einer sich in Richtung der Stange (3) erstreckenden Ausbauchung (49) ausgestattet ist.

8. Führungsschiene nach einem der vorhergehenden Ansprüche, **dadurch gekennzeichnet, dass** das hintere Halteelement (5) ausgehend von einem im montierten Zustand auf der Oberseite einer Stange (3) aufliegenden oberen Schenkel (51) mit einem nach unten abgewinkelten Steg (53) und einer hiervon abgewinkelten Stützlasche (52) versehen ist, wobei die Stützlasche (52) in einer gemeinsamen Ebene mit einem unteren Schenkel (50) des Halteelementes (5) liegt.

9. Führungsschiene nach Anspruch 8, **dadurch gekennzeichnet, dass** in den Übergangsbereichen zwischen dem oberen Steg (51), dem nach unten abgewinkelten Steg (53) und der hiervon ausgehend abgewinkelten Stützlasche (52) der Versteifung und Verstärkung dienende Sicken (54) eingeprägt sind.

10. Führungsschiene nach einem der vorhergehenden Ansprüche, **dadurch gekennzeichnet, dass** die Halteelemente (4, 4', 5) einstückig aus Metall hergestellt sind.

11. Führungsschiene nach einem der Ansprüche 1 bis 9, **dadurch gekennzeichnet, dass** die Halteelemente (4, 4', 5) einstückig aus Kunststoff gefertigt sind.

12. Führungsschiene nach einem der vorhergehenden Ansprüche, **dadurch gekennzeichnet, dass** das vordere Halteelement (4, 4') mit einem Anschlag (400) versehen ist, der im montierten Zustand eine Vertikalstange (6) des Seitengitters (2) hintergreift, so dass die Führungsschiene (1) gegenüber dem Seitengitter (2) in Verschieberichtung fixiert ist.

## Claims

1. Guide rail (1), which can be fixed to horizontally running rods (3), which are bent away at an angle in the end region (3a, 3b), of a grid-type side part (2) of a baking oven, a dishwasher or similar appliances, said guide rail having a quick-action fixing device consisting of two retaining elements (4, 4', 5) which are fixed in the end regions of the guide rail (1), can be detachably fastened to a rod (3) of a grid-type side part (2) and each have a first retaining section (4a, 4b, 5a, 52, 53), which partially engages around a rod (3) in the region of longitudinal extent thereof, and a second retaining section (4a, 4b, 5a, 52, 53), which partially engages around the rod (3) in the angled end regions (3a, 3b) thereof, wherein the retaining section (52, 53) facing towards the rear bent-away end region (3b) is open in the direction of the rear side of the guide rail (1), such that the guide rail (1) together with the quick-action fixing device can be pushed and fixed onto one of the rods (3), proceeding from the front side of the side grid (2), and the front retaining element (4, 4'), in the retaining section (4a) thereof which partially engages around a rod (3) in the region of longitudinal extent thereof, has a leg (40) lying below a rod (3) and a resilient latching lug (42), which extends upwards from said leg and engages behind the rod (3) around which the retaining element engages when the guide rail (1) is in the mounted position, **characterized in that** the upper free end (43) of the latching lug (42) protrudes into an aperture (44) of the leg (41) of the front retaining element (4, 4') which overlaps the rod (3) on the upper side, and yielding of the latching lug (42) in the horizontal direction is prevented by the end (43) being secured in a form-fitting manner in the aperture (44).

2. Guide rail according to Claim 1, **characterized in that** the side edge (47) of the latching lug (42) which faces towards the rod (3) runs upwards in a manner inclined in the direction of the rod (3).

3. Guide rail according to Claim 1 or 2, **characterized in that** the latching lug (42) is equipped with a lead-in chamfer (46) on the rear side facing away from the rod (3).

4. Guide rail according to one of the preceding claims, **characterized in that** the latching lug (42) can be pivoted downwards out of the plane of the rod (3) by means of an actuating section (45).

5. Guide rail according to one of the preceding claims, **characterized in that** the upper leg (41) of the retaining element (4) is equipped with a bead (48) which runs parallel to the rod (3), engages behind the rod (3) in the mounted state and extends in the direction of the lower leg (40).

6. Guide rail according to one of Claims 1 to 4, **characterized in that** the upper leg (41) of the retaining element (4') is equipped with an embossed formation (48a), which extends in the direction of the lower leg (40) and, when the guide rail (1) is in the mounted state, engages behind the rod (3), the free end (43) on the front end of the latching lug (42) engaging into the aperture of said embossed formation.

7. Guide rail according to one of the preceding claims, **characterized in that** the upper leg (41) of the retaining element (4, 4') is equipped with a bulge (49) extending in the direction of the rod (3).

8. Guide rail according to one of the preceding claims, **characterized in that,** proceeding from an upper leg (51) lying on the upper side of a rod (3) in the mounted state, the rear retaining element (5) is provided with a downwardly angled web (53) and a supporting tab (52) angled away therefrom, wherein the supporting tab (52) lies in a common plane with a lower leg (50) of the retaining element (5).

9. Guide rail according to Claim 8, **characterized in that** beads (54) serving to provide bracing and reinforcement are impressed into the transition regions between the upper web (51), the downwardly angled web (53) and the supporting tab (52) angled away therefrom.

10. Guide rail according to one of the preceding claims, **characterized in that** the retaining elements (4, 4', 5) are produced in one piece from metal.

11. Guide rail according to one of Claims 1 to 9, **characterized in that** the retaining elements (4, 4', 5) are produced in one piece from plastic.

12. Guide rail according to one of the preceding claims, **characterized in that** the front retaining element (4, 4') is provided with a stop (400), which engages behind a vertical rod (6) of the side grid (2) in the mounted state, such that the guide rail (1) is fixed in a direction of displacement with respect to the side grid (2).

## Revendications

1. Rail de guidage (1) qui peut être fixé à des tiges (3) horizontales dont les extrémités (3a,3b) sont recourbées, d'une partie latérale (2) en forme de grille, de four, de lave-vaisselle ou d'appareil analogue, comportant :
- un dispositif de fixation rapide formé de deux éléments de fixation (4, 4', 5) fixés dans les zones d'extrémité du rail de guidage (1), en étant reliés de manière amovible à une tige (3) de la partie latérale (2) en forme de grille, et ayant chacun un premier segment de fixation (4a, 4b, 5a, 52, 53) entourant partiellement la tige (3) dans sa zone longitudinale et un second segment de fixation (4a, 4b, 5a, 52, 53) qui entoure partiellement ses extrémités recourbées (3a, 3b),
- le segment d'extrémité (52, 53) tourné vers l'extrémité recourbé (3b) arrière, est ouvert en direction du côté arrière du rail de guidage (1) de façon que le rail de guidage (1) puisse être emmanché et fixé avec son dispositif de fixation rapide à partir du côté avant de la grille latérale (2) sur l'une des tiges (3) et que l'élément de fixation avant, (4, 4') par son segment de fixation (4a) entoure partiellement l'extension longitudinale d'une tige (3), par sa branche (40) située sous la tige (3) et comporte un bec d'accrochage (42) élastique remontant à partir de la branche, et qui en position installée du rail de guidage (1), vient prendre derrière la tige (3) entourée par l'élément de fixation,
**caractérisé en ce que**
le bec (42) pénètre par son extrémité libre (43) supérieure dans un passage (44) de la branche (41) de l'élément de fixation (4, 4') qui passe pardessus la tige (3) et interdit au bec (41) de s'échapper dans la direction horizontale par la fixation par une liaison par la forme de l'extrémité (43) dans le passage (44).

2. Rail de guidage selon la revendication 1,
**caractérisé en ce que**
l'arête latérale (47) du bec d'accrochage (42) tournée vers la tige (3) est inclinée en remontant dans la direction de la tige (3).

3. Rail de guidage selon la revendication 1 ou 2,
**caractérisé en ce que**
le côté arrière du bec d'accrochage (42), non tourné vers la tige (3) est muni d'un rampe de guidage (46).

4. Rail de guidage selon l'une des revendications précédentes,
**caractérisé en ce que**
le bec d'accrochage (42) peut être dégagé vers le bas hors du plan de la tige (3) à l'aide d'un segment d'actionnement (45).

5. Rail de guidage selon l'une des revendications précédentes,
**caractérisé en ce que**
la branche supérieure (41) de l'élément de fixation (4) est munie d'une moulure (48) s'étendant dans la direction de la branche inférieure (40) et parallèle à la tige (3), en venant prendre derrière la tige (3), à l'état installé.

6. Rail de guidage selon l'une des revendications 1 à 4,
**caractérisé en ce que**
la branche supérieure (41) de l'élément de fixation (4') est munie d'une déformation (48a) en direction de la branche inférieure (40) et qui, à l'état installé du rail de guidage (1), vient prendre derrière la tige (3) et pénètre dans le passage de l'extrémité frontale libre (43) du bec d'accrochage (42).

7. Rail de guidage selon l'une des revendications précédentes,
**caractérisé en ce que**
la branche supérieure (41) de l'élément de fixation (4, 4') est munie d'une forme bondée (49) s'étendant en direction de la tige (3).

8. Rail de guidage selon l'une des revendications précédentes,
**caractérisé en ce que**
l'élément de fixation arrière (5), partant de la branche supérieure (51) qui, à l'état installé, s'appuie sur le dessus d'une tige (3), est muni d'une entretoise (53) recourbée vers le bas et d'une patte d'appui (52) repliée à partir de celle-ci, la patte d'appui (52) étant située dans un plan commun avec la branche inférieure (50) de l'élément de fixation (5).

9. Rail de guidage selon la revendication 8,
**caractérisé en ce que**
des moulures (54) servant à rigidifier et à renforcer sont imprimées dans la zone transitoire entre la branche supérieure (51), la branche (53) recourbé vers le bas et la patte d'appui (52) repliée à partir de celle-ci.

10. Rail de guidage selon l'une des revendications précédentes,
**caractérisé en ce que**
les éléments de fixation (4, 4', 5) sont réalisés en une seule pièce en métal.

11. Rail de guidage selon l'une des revendications 1 à 9,
**caractérisé en ce que**
les éléments de fixation (4, 4', 5) sont réalisés en une seule pièce en matière plastique.

12. Rail de guidage selon l'une des revendications précédentes,
**caractérisé en ce que**
l'élément de fixation avant (4,4') est muni d'une butée (400) qui, à l'état installé, vient prendre derrière une tige verticale (6) de la grille latérale (2) de façon que le rail de guidage (1) soit bloqué par rapport à la grille latérale (2) dans la direction de coulissement.
